# EUROPEAN PATENT APPLICATION

(11) **EP 4 124 826 A2**
(43) Date of publication of application: **01.02.2023**
(21) Application number: 22178843.3
(22) Date of filing: 14.06.2022
(51) Int. Cl.: G01C 15/00, E02F 9/24, G06Q 50/08, G08B 21/02

(54) **SURVEYING DATA PROCESSING APPARATUS, SURVEYING DATA PROCESSING METHOD, AND SURVEYING DATA PROCESSING PROGRAM**

(30) Priority: 26.07.2021 JP 2021121288
(71) Applicant: TOPCON CORPORATION, Tokyo 174-8580 (JP)
(72) Inventor: SASAKI, You, Tokyo, 174-8580 (JP)
(74) Representative: Eisenführ Speiser

(57) **Abstract**

Versatile and convenient safety management of a construction machine is achieved. Construction machines and workers are photographed by a camera of a surveying apparatus. The images of a construction machine and a worker are identified in the photographic image. The positions of the construction machine and the worker that are identified in the photographic image are measured by the surveying apparatus with the use of laser light. The separation distance between the construction machine and the worker in which the positions are measured is calculated. In the case in which the calculated separation distance is at a threshold or less, a warning is issued to the construction machines and the workers.

## Description

### BACKGROUND OF THE INVENTION

### Technical Field

The present invention relates to a technique for ensuring safety during operation of a construction machine.

### Background Art

Construction machines, such as heavy equipment, must be operated while safety in the surroundings is ensured. In general, a worker is assigned to monitor safety and to maintain safety. Japanese Unexamined Patent Application Laid-Open No. 2021-67469 discloses a technique of ensuring safety by estimating a distance between a construction machine and a person, from a photographic image obtained by a camera disposed on the construction machine.

The technique disclosed in Japanese Unexamined Patent Application Laid-Open No. 2021-67469 requires mounting a camera on a construction machine, and multiple cameras are necessary in order to ensure safety in the surroundings of the construction machine. This decreases versatility and convenience.

### SUMMARY OF THE INVENTION

In view of this, an object of the present invention is to provide a versatile and convenient technique for safety management of a construction machine.

An aspect of the present invention provides a surveying data processing apparatus including a processor or circuitry. The processor or circuitry is configured to acquire image data of a photographic image of a construction machine and a target object, and to identify images of the construction machine and the target object that are contained in the photographic image. The processor or circuitry is further configured to measure a position of each of the construction machine and the target object that are identified in the photographic image. The position is measured by using laser light. The processor or circuitry is further configured to calculate a separation distance between the construction machine and the target object in which the positions are measured by using the laser light, and to issue a warning in a case in which the separation distance is at a threshold or less.

In the present invention, the processor or circuitry is preferably further configured to store a threshold that is set in accordance with the type of construction machine, and a threshold that is set in accordance with a model number of the construction machine, and to identify the type or the model number of the construction machine. In this case, the threshold may be selected based on the identified content.

In the present invention, the separation distance between the construction machine and the target object is preferably estimated based on the photographic image, and the position of each of the construction machine and the target object is preferably measured by using the laser light, based on the estimated separation distance.

In the present invention, the position of each of the construction machine and the target object is preferably measured by using laser light in a case in which the estimated separation distance is at a specific value or less. In the present invention, the separation distance is preferably estimated based on the following parameters: a distance from a photographing position to the construction machine, based on a dimension of the image of the construction machine in the photographic image, a direction of the construction machine from the photographing position, a distance from the photographing position to the target object, based on a dimension of the image of the target object in the photographic image, and a direction of the target object from the photographing position.

In the present invention, the estimation of the separation distance between the construction machine and the target object based on the photographic image preferably uses a condition that is corrected based on a result of measuring the position of each of the construction machine and the target object by using laser light. In the present invention, the condition is preferably a predetermined dimension of one or each of the construction machine and the target object.

In the present invention, the photographing is preferably repeatedly performed, and the separation distance between the construction machine and the target object is preferably estimated with respect to each photographic image obtained by the photographing that is repeated. In addition, the position of each of the construction machine and the target object is preferably measured by using laser light, in a case in which a predetermined time elapses from a start of estimating the separation distance that is performed to the photographic images.

Another aspect of the present invention provides a surveying data processing method including acquiring image data of a photographic image of a construction machine and a target object. The method also includes identifying images of the construction machine and the target object that are contained in the photographic image, and measuring a position of each of the construction machine and the target object that are identified in the photographic image. The position is measured by using laser light. The method further includes calculating a separation distance between the construction machine and the target object in which the positions are measured by using the laser light, and issuing a warning in a case in which the separation distance is at a threshold or less.

Yet another aspect of the present invention provides a non-transitory computer recording medium storing computer executable instructions for processing surveying data. The computer executable instructions are made to, when executed by a computer processor, cause the computer processor to perform the following operations: acquire image data of a photographic image of a construction machine and a target object, identify images of the construction machine and the target object that are contained in the photographic image, measure a position of each of the construction machine and the target object that are identified in the photographic image, the position being measured by using laser light, calculate a separation distance between the construction machine and the target object in which the positions are measured by using laser light, and issuing a warning in a case in which the separation distance is at a threshold or less.

The present invention provides a versatile and convenient technique for safety management of a construction machine.

### BRIEF DESCRIPTION OF DRAWINGS

Fig. 1 is a schematic drawing of an embodiment.
Figs. 2A and 2B show the external appearance of a surveying apparatus.
Fig. 3 is a block diagram of the surveying apparatus.
Fig. 4 is a flowchart showing an example of a processing procedure.

### PREFERRED EMBODIMENTS OF THE INVENTION

### 1. First Embodiment

### Overview

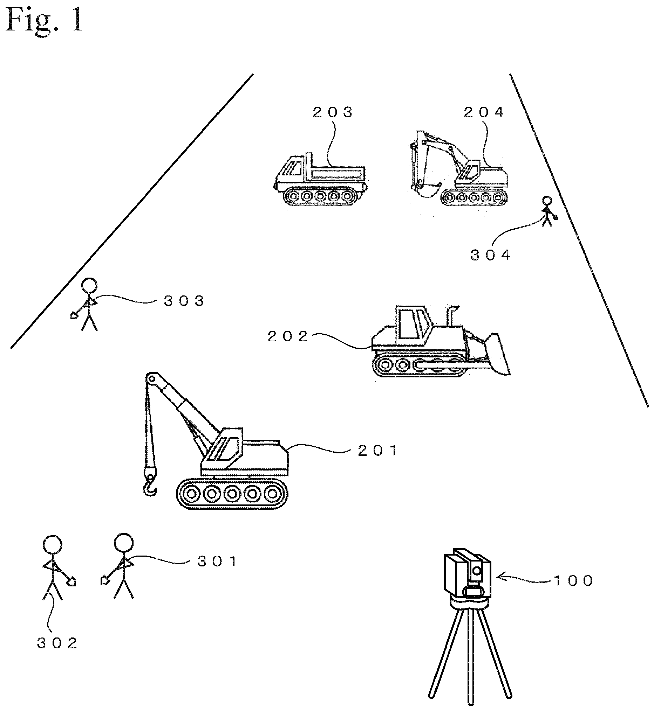

Fig. 1 shows an overview of an embodiment. Fig. 1 shows a surveying apparatus 100. The surveying apparatus 100 is a total station having a camera, a laser positioning function, and a function of automatically tracking a target to be surveyed.

Fig. 1 shows construction machines 201 to 204 and workers 301 to 304 who are engaged in construction work. The surveying apparatus 100 conducts safety management of the construction machines 201 to 204 and the workers 301 to 304. Specifically, the surveying apparatus 100 monitors so as to prevent interference among construction machines 201 to 204 and workers 301 to 304, and to prevent interference among construction machines 201 and 204. In this example, the risk that these interferences will occur is estimated by using a surveying function of the surveying apparatus 100, and notification is made when the risk is determined to be high.

This process can be executed by installing the surveying apparatus 100, and it can be performed automatically. Thus, versatile and convenient safety management of a construction machine can be achieved.

### Surveying Apparatus

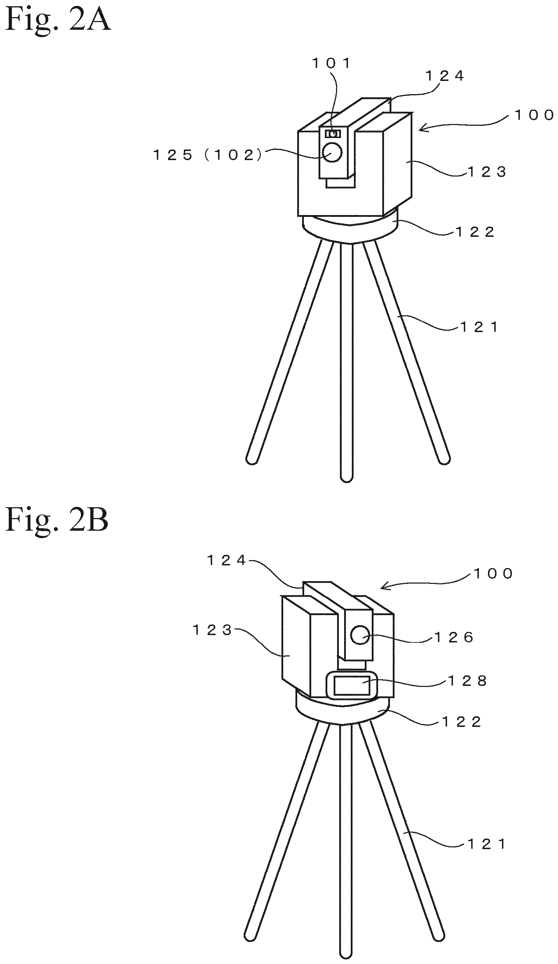

Figs. 2A and 2B are perspective views of the surveying apparatus 100. Fig. 2A is a perspective view as seen from a front side, and Fig. 2B is a perspective view as seen from a back side. The surveying apparatus 100 includes a base 122 that is fixed on a tripod 121, a horizontal rotation unit 123 that is horizontally rotatable on the base 122, and a vertical rotation unit 124 that is held in a state of being vertically rotatable (being controllable in elevation angle and depression angle) by the horizontal rotation unit 123.

Horizontal rotation and vertical rotation are performed by motors. The horizontal angle of the horizontal rotation unit 123 (oriented direction in the horizontal direction of an optical axis of a telescope 125) and a vertical angle of the vertical rotation unit 124 (an elevation angle or a depression angle of the optical axis of the telescope 125 or a telephoto lens camera 102) are accurately measured by an encoder.

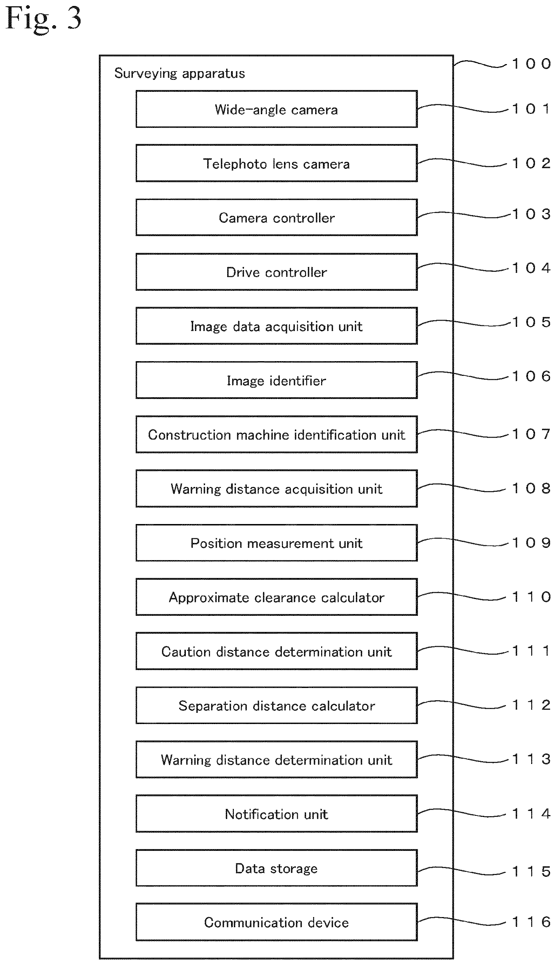

The vertical rotation unit 124 includes the telescope 125 and a wide-angle camera 101 on a front side thereof and includes an ocular part 126 of the telescope 125 and a touch panel display 128 on a back side thereof. The telescope 125 also serves as an optical system of the telephoto lens camera 102 shown in Fig. 3. The telescope 125 also has an objective lens through which distance measuring laser light for measuring a distance is emitted to the outside and through which reflected light of the emitted light is received.

The touch panel display 128 is an operation panel and a display of the surveying apparatus 100. The touch panel display 128 shows various information related to operation of the surveying apparatus 100 and information related to surveying result.

### Block Diagram of Surveying Apparatus

Fig. 3 is a functional block diagram of the surveying apparatus 100. The surveying apparatus 100 includes a wide-angle camera 101, a telephoto lens camera 102, a camera controller 103, a drive controller 104, an image data acquisition unit 105, an image identifier 106, a construction machine identification unit 107, a warning distance acquisition unit 108, a position measurement unit 109, an approximate clearance calculator 110, a caution distance determination unit 111, a separation distance calculator 112, a warning distance determination unit 113, a notification unit 114, a data storage 115, and a communication device 116.

Each functional unit of the camera controller 103, the drive controller 104, the image data acquisition unit 105, the image identifier 106, the construction machine identification unit 107, the warning distance acquisition unit 108, a part of the position measurement unit 109, the approximate clearance calculator 110, the caution distance determination unit 111, the separation distance calculator 112, the warning distance determination unit 113, the notification unit 114, and the data storage 115 is implemented by a computer.

This computer includes a CPU, a storage device, and an interface. An operation program for executing the functions of these functional units is read and executed by the computer, whereby each of the functional units is implemented. One, some, or all of the functional units may be implemented by dedicated hardware.

In addition, one, some, or all of the functional units may be implemented by an external computer. In this case, the surveying apparatus 100 is connected to the external computer via a communication line so as to be remotely operated by the external computer, and the surveying apparatus 100 transmits surveying data to the external computer that executes a part or all of processes, which will be described later.

The wide-angle camera 101 is a digital still camera that takes photographs of relatively wide angles. The telephoto lens camera 102 takes photographs of relatively narrow angles via the telescope 125. Both of the wide-angle camera 101 and the telephoto lens camera 102 can take still images and moving images.

The relationships of exterior orientation parameters (position and attitude) in the surveying apparatus 100 between the wide-angle camera 101, the telephoto lens camera 102, and an optical system of the position measurement unit 109, which will be described later, are already known. The optical axes of the telephoto lens camera 102 and the optical system of the position measurement unit 109 are on the same axial line that is the optical axis of the telephoto lens camera 125. The optical axis of the wide-angle camera 101 is parallel to the optical axes of the telephoto lens camera 102 and the optical system of the position measurement unit 109, that is, it is parallel to the optical axis of the telescope 125.

The camera controller 103 controls operations of the wide-angle camera 101 and the telephoto lens camera 102. Specifically, the camera controller 102 controls photographing timing, magnification, shutter speed, and other photographing conditions.

The drive controller 104 transmits a control signal to a drive circuit that drives a motor for rotating the horizontal rotation unit 123, and it thereby controls horizontal rotation of the horizontal rotation unit 123. The drive controller 104 also transmits a control signal to a drive circuit that drives a motor for rotating the vertical rotation unit 124, and it thereby controls vertical rotation of the vertical rotation unit 124.

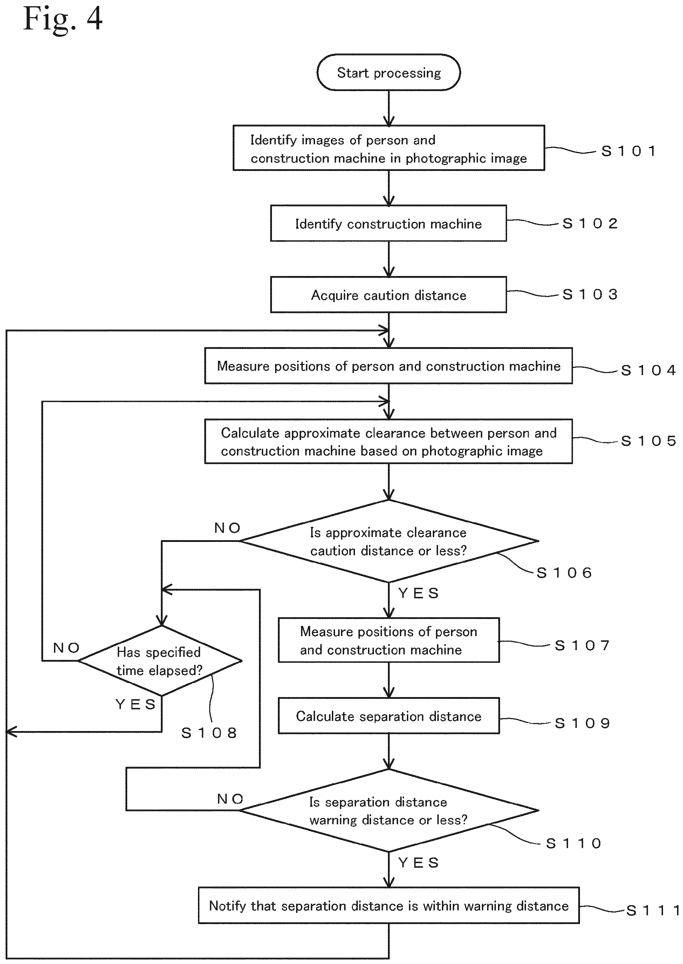

The image data acquisition unit 105 acquires image data of photographic images obtained by the wide-angle camera 101 and the telephoto lens camera 102. The image identifier 106 performs the process in step S101 in Fig. 4. The construction machine identification unit 107 performs the process in step S102 in Fig. 4. The warning distance acquisition unit 108 performs the process in step S103 in Fig. 4.

The position measurement unit 109 measures a position by using laser light or distance measuring light. The position measurement unit 109 includes a unit for emitting the distance measuring light, a unit for receiving this light, an optical system of these units, a circuit related to emission of the light, and a circuit related to reception of the light. The position measurement unit 109 also includes a calculation circuit and a calculator that performs calculation for measuring a distance, and a calculator for calculating a position of a reflection point (target measurement point) based on a measured distance value and a direction of the optical axis of the distance measuring light.

The position of the target measurement point is calculated from a distance to the target measurement point that is measured by using the distance measuring light and from a direction of the optical axis of the distance measuring light. The distance is calculated by using the principle of electro-optical distance measurement. The distance can be calculated by a method using a phase difference or a propagation time of the distance measuring light that is received. In this example, the distance is measured by the method using a phase difference.

In the method using a phase difference, a reference optical path is provided in a position measurement device (in this case, surveying apparatus 100), and the distance from the surveying apparatus 100 to a target measurement point is calculated from a difference (phase difference) between the timing of receiving the distance measuring light that has propagated through the reference optical path and the timing of receiving the distance measuring light that has reflected back from the target measurement point. In the method using a propagation time, the distance from the surveying apparatus 100 to a target measurement point is calculated based on the time it takes for the distance measuring light to reach the target measurement point and be reflected back.

The direction of the target measurement point as seen from the surveying apparatus 100, which is a direction of the optical axis of the distance measuring light, is obtained by measuring a rotation angle of each of the horizontal rotation unit 123 and the vertical rotation unit 124. The rotation angle of each of the horizontal rotation unit 123 and the vertical rotation unit 124 is accurately measured by an encoder.

In a condition in which the distance and the direction from the surveying apparatus 100 to the target measurement point are determined, the position (coordinates) of the target measurement point in a coordinate system is calculated. This coordinate system has an origin at the surveying apparatus 100. In this state, in the condition in which exterior orientation parameters (position and attitude) of the surveying apparatus 100 in an absolute coordinate system are known, the position of the target measurement point in the absolute coordinate system is obtained. The absolute coordinate system is a coordinate system that is used in a map and in a GNSS, and the position is described, for example, in terms of latitude, longitude, and elevation.

The approximate clearance calculator 110 performs the process in step S105 in Fig. 4. The caution distance determination unit 111 performs the process in step S106 in Fig. 4. The separation distance calculator 112 performs the process in step S109 in Fig. 4. The warning distance determination unit 113 performs the process in step S110 in Fig. 4. The notification unit 114 performs the process in step Sill in Fig. 4.

The data storage 115 stores data necessary to operate the surveying apparatus 100, an operation program, and data obtained as a result of surveying. The communication device 116 communicates with an external device. The communication is made in accordance with a wireless LAN standard or by using a telephone line.

### Example of Processing Procedure

Fig. 4 shows an example of a procedure of processing performed by the surveying apparatus 100. The following describes an example of performing safety management of a construction machine by using the surveying apparatus 100. Herein, processing for preventing interference between a construction machine and a worker will be described.

The program for executing the processing in Fig. 4 is stored in an appropriate storage medium and is executed by the CPU of the computer assembled in the surveying apparatus 100. The processing in Fig. 4 may be executed by a PC or a server. The program for executing the processing in Fig. 4 may be stored in a server and may be downloaded for use.

The following processing is started in the state in which the surveying apparatus 100 is placed in a construction site, as shown in Fig. 1. Note that, prior to the processing, exterior orientation parameters (position and attitude) of the surveying apparatus 100 in the absolute coordinate system are determined and are already known.

The processing in Fig. 4 is started in a situation in which a construction machine is operated, and the wide-angle camera 101 and/or the telephoto lens camera 102 of the surveying apparatus 100 continuously take photographic images of a construction site at which a worker is working. The photographing is performed continuously at an interval of approximately 0.5 seconds to 5 seconds. Alternatively, a moving image may be obtained, and frame images thereof may be used as continuous photographic images.

The processing in Fig. 4 is performed on each of the photographic images that are continuously obtained. In a case in which the calculation does not keep up with the speed of obtaining photographic images, the processing is performed on each of the images that are obtained at a certain interval, such as a first photographic image, a third photographic image, a fifth photographic image, and....

After the processing starts, first, images of a person and a construction machine are identified in a photographic image (step S101). This process is performed by using publicly known image identification software. This process is performed by the image identifier 106.

Herein, the person is assumed to be a worker who is engaged in construction. The image detection of a person is performed by using a publicly known image detection algorithm for detecting an image of a person. The image identification of a construction machine is performed by comparing the image of the construction machine with a reference image of a construction machine that is expected to be used.

In addition, in this example, each worker wears a vest and a helmet, to which identification information is attached, and each construction machine has identification information. The image identification involves obtaining these pieces of identification information and associating them with image information.

Herein, multiple persons and multiple construction machines are identified in a photographic image, and one pair of a person and a construction machine is selected and is subjected to the processing in Fig. 4. The processing in Fig. 4 is executed on the other pairs in a parallel manner.

In one example, workers 301 to 303 and a construction machine 201 are contained in a photographic image, and the images thereof are identified. In this case, the processing in Fig. 4 is performed on each of a pair of worker 301 and construction machine 201, a pair of worker 302 and construction machine 201, and a pair of worker 303 and construction machine 201, in a parallel manner.

Next, the construction machine is identified (step S 102). The construction machine is identified by determining the type of the construction machine or the model number of the construction machine. The type of the construction machine is a type of structure or use and represents, for example, a hydraulic shovel, a bulldozer, or a mobile crane. The model number of the construction machine represents a model of the construction machine, and the model can be identified by an identification number or a product name provided by a manufacturer or a distributor.

After the construction machine is identified, a warning distance of the identified construction machine is acquired (step S 103). The warning distance is a minimum value of the distance between the construction machine and a person, which distance can ensure safety. The warning distance differs depending on the type and the model of the construction machine. The warning distance is set in advance and is stored in an appropriate storage area.

In this example, a warning distance in accordance with the type of the construction machine and a warning distance in accordance with the model number of the construction machine are set in advance. The warning distance in accordance with the model number is acquired in the case in which the model number is identified, and the warning distance in accordance with the type of the construction machine is acquired in the case in which the type of construction machine can be identified even though the model number cannot be identified.

Then, the positions of the person and the construction machine that are identified in the photographic image in step S101 are measured (step S 104). This process is performed by the laser positioning function of the surveying apparatus 100. The position of the person is measured by sighting the waist. The position of the construction machine is measured by sighting the photographic image center or the body of the construction machine.

Thereafter, an approximate clearance is calculated (step S 105). The approximate clearance is a separation distance between the person and the construction machine, which distance is estimated from the photographic image. The approximate clearance is an estimated value and can contain error.

There are two methods for obtaining the approximate clearance. First, the first method will be described. The first method involves calculating the approximate clearance from a separation distance between the person and the construction machine in the photographic image.

First, an on-screen separation distance is obtained as a separation distance between the person and the construction machine in the photographic image. The on-screen separation distance is represented in terms of the number of pixels. Next, an actual separation distance between the person and the construction machine is calculated based on the three-dimensional positions of the person and the construction machine, which are obtained in step S104. Then, the relationship between the on-screen separation distance and the actual separation distance is obtained.

On the basis of this relationship, the approximate clearance is calculated from the on-screen separation distance. In this case, if the on-screen separation distance becomes half of that at the time of an initial period, it is estimated that the approximate clearance also is half. This method is simple, but it cannot evaluate the change in distance in the depth direction of the photographic image, that is, in the direction away from and toward the camera.

Next, the second method for calculating the approximate clearance will be described. The second method can evaluate the change in distance in the depth direction of the photographic image, that is, in the direction away from and toward the camera.

The following describes details of the second method for calculating the approximate clearance. Prior to calculation of the approximate clearance, positioning data of each of the construction machine and the person that are identified in the photographic image is obtained (step S 104). This positioning is performed with high accuracy by the positioning function using laser light of the surveying apparatus 100.

In this state, the dimension in the image of a target object that is identified in the photographic image is associated with distance information that is obtained by positioning. Herein, the target object is each of the construction machine and the person that are identified in the photographic image.

The dimension in the image of the target object is obtained by counting the number of pixels. Moreover, a part for which dimension is presumed to be known or has been clearly determined for the target object, is used, and the information of this actual dimension is set as an estimated value. In one example, for a person, a dimension in the height direction is assumed to be 170 cm. In another example, for a construction machine, an average ground clearance of the type of the construction machine or a ground clearance of a catalog value based on the acquired model number, is used.

In yet another example, in the case in which a part having a dimension that is already known is identified in the photographic image, the dimension of this part may be obtained and may be associated with the image identified in the photographic image.

After the actual dimension of the part that is identified in the photographic image is obtained, an approximate relationship between the number of pixels in the photographic image and the actual dimension of the target object in the photographic image is determined. This process is performed for each person and construction machine.

The relationship between a distance to a photographed target and a dimension (number of pixels) of an image thereof is obtained in advance in the camera that is used. This relationship is obtained as data quantitatively showing that a closer object appears to be larger and a farther object appears to be smaller.

Specifically, with the use of a gauge having a reference length (e.g., 1 meter), the distance from the camera to the gauge is set to a vertical axis, and the number of pixels in a photographic image of the gauge seen from a front side is set to a lateral axis, whereby a calibration curve is obtained in advance. Details of this calibration curve are disclosed in, for example, Japanese Unexamined Patent Application Laid-Open No. 2018-13343.

This calibration curve is used to calculate the distance from the camera to an identified target object, based on the photographic image. For example, images of a person and a construction machine that are identified in the photographic image are considered. First, it is assumed that calculation of the approximate clearance in step S105 has just started.

At this time, the number of pixels "N" in the height direction of the person in the photographic image is determined. Herein, it is assumed that the height of the target person is h = 170 cm. In addition, the above-described calibration curve has already been obtained with respect to a gauge of 1 meter. In this case, the number of pixels of N × 1.7 is applied to the calibration curve, whereby a distance "D" corresponding to the number "N" of pixels is calculated.

On the other hand, a distance D0 to the target person is obtained with high accuracy in step S 104. On the condition that D = D0, the assumption of h = 170 cm is revealed to be appropriate.

In the condition in which D ≠ D0, the set value of "h" is changed so that D = D0. That is, it is determined that the assumed height of the person contained in the photographic image of 170 cm is not appropriate, and the set value of the height of the person is corrected so that D = D0. In this manner, calibration is performed on the calculated value (estimated value) of the distance from the camera (surveying apparatus 100) to the target object, which calculated value is obtained based on the photographic image.

A similar process is performed to the construction machine, whereby the distance from the camera (surveying apparatus 100) to the construction machine is calculated based on the photographic image. Thus, on the basis of the photographic image of the person and the construction machine, the approximate distance from the camera (surveying apparatus 100) to each of the person and the construction machine contained in the photographic image is calculated.

On the other hand, the position (on-screen position) of the person and the construction machine in the photographic image, that is, on-screen coordinates, can be known by analyzing the photographic image. After the on-screen position of the target image in the photographic image is determined, the direction of the target image as seen from the camera (photographing viewpoint) is obtained by setting a directional line connecting a point at the on-screen position and the projection origin of the camera.

In the condition in which the direction is determined, the positions of the person and the construction machine having an origin at the camera (surveying apparatus 100) are calculated based on the information of the direction and the information of the distance, which is obtained by the image analysis. After the positions of the person and the construction machine are determined, a distance (separation distance) therebetween is calculated. Thus, the approximate clearance, which is a separation distance between the person and the construction machine, is calculated (estimated) from the photographic image.

The method of obtaining the positions of a person and a construction machine from a photographic image is not very accurate; however, at the time of an initial period, the obtained positions are calibrated based on positioning data that is obtained by the laser positioning function of the surveying apparatus 100, and thus, accuracies thereof are high.

The photographing is repeated continuously, and the above-described process of calculating an approximate clearance is performed for each of multiple photographic images that are discrete on a time axis. During this process, calculation accuracy (estimation accuracy) is high at the time of an initial period, but it decreases as the process is repeated. That is, repetition of the calculation of an approximate clearance based on the continuously obtained photographic images, decreases accuracy of the calculation as time elapses.

This is because the calibration curve showing the relationship between the number of pixels and the distance has a low resolution, and as the distance is increased, resolution notably decreases. In addition, as time elapses, the direction and the attitude of the person and the construction machine vary, and these variations cause errors. This problem is reduced by performing the process in step S108. If the target object is stationary, accuracy is not decreased.

After step S105, whether the calculated approximate clearance is not greater than the caution distance, which is obtained in step S103, is determined (step S 106). The caution distance is a distance set to be greater than the warning distance and is a reference for preliminary determination before warning is issued. The caution distance may be set for each type of construction machine or for a construction machine, or it may be set to a certain value.

In one example in which the caution distance is set for each type of construction machine or for a construction machine, it may be set to "warning distance + 3 meters" of the corresponding construction machine. In another example in which the caution distance is uniformly set, it may be set to a value exceeding a maximum value among warning distances of construction machines that are supposed to be used.

The caution distance may be variably set in accordance with circumstances. As the distance to a target object increases, variation in the number of pixels (variation in apparent dimension of the image of the target object in a photographic image) decreases relative to variation in distance, whereby resolution of the estimated distance is decreased. That is, as the distance increases, accuracy of the approximate clearance decreases. In view of this, with respect to a target object that is farther than a specified distance, the caution distance is set long in order to obtain a margin for securing safety.

In the case in which the approximate clearance is the caution distance or less in step S106, the processing advances to step S107. Otherwise, the processing advances to step S108. In step S107, positions of the target person and the target construction machine are measured. This positioning is performed by the laser positioning function of the surveying apparatus 100.

In step S108, at the current time, it is determined whether a specified time has elapsed from the initial start of the process in step S105 after step S104. Then, the processes in step S104 and the subsequent steps are repeated in the case in which the specified time has elapsed, and the processes in step S105 and the subsequent steps are repeated in the case in which the specified time has not yet elapsed. The specified time is selected from approximately 2 to 60 seconds, for example. The determination in step S108 causes periodic execution of step S104, resulting in suppressing increase in error in calculation based on a photographic image.

Moreover, executing the process in step S108 reduces the frequency of laser positioning in each of steps S104 and S107. Normally, the movable parts of the surveying apparatus 100 must be finely moved each time of laser positioning, due to the necessity of fine adjustment of the optical axis of the surveying apparatus 100. Thus, if the frequency of laser positioning is high, this fine movement is also performed often. This causes an increase in consumption of electric power, resulting in low usability. Execution of the process in step S108 suppresses this problem.

After step S107, a separation distance between the target person and the target construction machine is calculated based on the positioning data obtained in step S107 (step S109). This separation distance is obtained by calculating the distance between the position of the person and the position of the construction machine, which are obtained in step S107. Next, whether the separation distance that is calculated in step S109 is the warning distance or less is determined (step S110).

In the case in which the separation distance that is calculated in step S109 is the warning distance or less in step S110, a warning is issued that the separation distance between the target person and the target construction machine is the warning distance or less (step S111). In the case in which the separation distance that is calculated in step S109 is not the warning distance or less in step S110, the processing advances to step S108.

The notification in step S111 is performed wirelessly. In this example, the worker carries a radio unit, and the construction machine is equipped with a radio unit. The above-described notification is provided to the radio unit by wireless communication. Upon receiving this notification, the corresponding radio unit outputs an alarm sound so as to warn the worker or a construction machine operator. Alternatively or additionally, notification may be performed by blinking an alarm lamp or by vibration. In addition, notification may be performed by making the target construction machine generate an alarm sound.

Herein, the construction machine, and the radio unit that is equipped in the construction machine, are individually identified, and the worker and the radio unit carried by the worker are also individually identified. In one example, it is assumed that the construction machine 201 and the workers 301 to 303 in Fig. 1 are targets to be monitored, and the processing in Fig. 4 is performed. Herein, the construction machine 201 is distinguished from other construction machines, and the radio unit equipped in the construction machine 201 is also distinguished from other radio units, in a photographic image. Moreover, the workers 301 to 303 are individually distinguished from each other, and the radio units carried by them are also individually distinguished from each other.

In these conditions, the separation distance between the construction machine 201 and the worker 301 may become the warning distance or less. In this case, notification is issued to the radio unit of the construction machine 201 and the radio unit carried by the worker 301. Of course, notification can be issued to all of the monitored targets.

### Other Matters

The monitored targets are not limited to the pair of a person and a construction machine, and they can be another pair, for example, a pair of a construction machine and a construction machine, a pair of a construction machine and a construction building, a pair of a construction machine and a standing tree, a pair of a construction machine and a natural formation such as a cliff, a pair of a construction machine and another machine such as a generator, or a pair of a construction machine and materials.

## Claims

1. A surveying data processing apparatus comprising a processor or circuitry, the processor or circuitry configured to:
acquire image data of a photographic image of a construction machine and a target object;
identify images of the construction machine and the target object that are contained in the photographic image;
measure a position of each of the construction machine and the target object that are identified in the photographic image, the position being measured by using laser light;
calculate a separation distance between the construction machine and the target object in which the positions are measured by using laser light; and
issue a warning in a case in which the separation distance is at a threshold or less.

2. The surveying data processing apparatus according to claim 1, wherein the processor or circuitry is further configured to:
store a threshold that is set in accordance with a type of the construction machine and a threshold that is set in accordance with a model number of the construction machine; and
identify the type or the model number of the construction machine, and the threshold is selected based on the identified content.

3. The surveying data processing apparatus according to claim 1 or 2, wherein the separation distance between the construction machine and the target object is estimated based on the photographic image, and the position of each of the construction machine and the target object is measured by using laser light, based on the estimated separation distance.

4. The surveying data processing apparatus according to claim 3, wherein the position of each of the construction machine and the target object is measured by using laser light, in a case in which the estimated separation distance is a specific value or less.

5. The surveying data processing apparatus according to claim 3 or 4, wherein the separation distance is estimated based on the following parameters:
a distance from a photographing position to the construction machine, based on a dimension of the image of the construction machine in the photographic image;
a direction of the construction machine from the photographing position;
a distance from the photographing position to the target object, based on a dimension of the image of the target object in the photographic image; and
a direction of the target object from the photographing position.

6. The surveying data processing apparatus according to any one of claims 3 to 5, wherein the estimation of the separation distance between the construction machine and the target object based on the photographic image uses a condition that is corrected based on a result of measuring the position of each of the construction machine and the target object by using laser light.

7. The surveying data processing apparatus according to claim 6, wherein the condition is a predetermined dimension of one or each of the construction machine and the target object.

8. The surveying data processing apparatus according to any one of claims 3 to 7, wherein the photographing is repeatedly performed,
the separation distance between the construction machine and the target object is estimated with respect to each of photographic images that are obtained by the photographing that is repeated, and
the position of each of the construction machine and the target object is measured by using laser light, in a case in which a predetermined time elapses from a start of estimating the separation distance that is performed on the photographic images.

9. A surveying data processing method comprising:
acquiring image data of a photographic image of a construction machine and a target object;
identifying images of the construction machine and the target object that are contained in the photographic image;
measuring a position of each of the construction machine and the target object that are identified in the photographic image, the position being measured by using laser light;
calculating a separation distance between the construction machine and the target object in which the positions are measured by using laser light; and
issuing a warning in a case in which the separation distance is at a threshold or less.

10. A non-transitory computer recording medium storing computer executable instructions for processing surveying data, the computer executable instructions made to, when executed by a computer processor, cause the computer processor to:
acquire image data of a photographic image of a construction machine and a target object;
identify images of the construction machine and the target object that are contained in the photographic image;
measure a position of each of the construction machine and the target object that are identified in the photographic image, the position being measured by using laser light;
calculate a separation distance between the construction machine and the target object in which the positions are measured by using the laser light; and
issue a warning in a case in which the separation distance is at a threshold or less.
